# EUROPEAN PATENT APPLICATION

(11) **EP 2 581 838 A1**
(43) Date of publication of application: **17.04.2013**
(21) Application number: 11185308.1
(22) Date of filing: 14.10.2011
(51) Int. Cl.: G06F 17/30

(54) **Method for ranking messages**

(71) Applicant: Alcatel Lucent, 75007 Paris (FR)
(72) Inventor: Hong, Dohy, 91620 NOZAY (FR); Labrogere, Paul, 91620 NOZAY (FR); Aidan, Bruno, 91620 NOZAY (FR)
(74) Representative: Loyer & Abello

(57) **Abstract**

A computer implemented method for user-enhanced ranking of messages, the method comprising:
receiving a datastream, the datastream comprising a message generated by an end-user, an identifier of an earlier message and an attribute defined by the end-user, the earlier message being stored in a computer-based database (4) comprising a collection of messages interrelated by a collection of directional links,
storing the message in the computer based database (4) as an additional message of the collection of messages,
generating a link in the computer-based database as an additional link of the collection of links, the additional link pointing from the additional message to the earlier message,
storing the attribute in the computer-based database (4) in association to the additional message, and
computing a link-based rank for the earlier message as a function of the collection of links and the attribute associated to the additional message.

## Description

### Field of the invention

The invention relates to the technical field of ranking information objects stored in databases, more precisely the invention is related to user-enhanced link-based ranking of messages.

### Background

Message boards are webservices which store messages posted by end-users and which display and sort those messages on the request of the end-users. Those webservices are connected to databases in which the webservice stores the messages posted by the end-users. The messages originate from a text content that an end-user posted to start a discussion or reply to another message. However, such databases may have stored hundreds or thousands of messages. In order to allow the end-user to browse among this large quantity of messages, message boards webservices are able to sort the messages stored in their database on a time basis, i.e. from the most recent one to the oldest one, or by the way of a keyword request, i.e. all messages comprising the specific keyword are displayed. However, sorting the message on a time basis or on a keyword request is not sufficient for efficient information retrieval when a large quantity of messages is stored in the database.

### Summary

In an embodiment, the invention provides a computer implemented method for user-enhanced ranking of messages, the method comprising:
receiving a datastream, the datastream comprising a message generated by an end-user, an identifier of an earlier message and an attribute defined by the end-user, the earlier message being stored in a computer-based database comprising a collection of messages interrelated by a collection of directional links,
storing the message in the computer based database as an additional message of the collection of messages,
generating a link in the computer-based database as an additional link of the collection of links, the additional link pointing from the additional message to the earlier message,
storing the attribute in the computer-based database in association to the additional message, and
computing a link-based rank for the earlier message as a function of the collection of links and the attribute associated to the additional message. According to embodiments, such computer implemented method can comprise one or more of the features below.

In embodiments of the method, the step of computing a rank for the earlier message comprises:
selecting a plurality of paths within the collection of messages, each path comprising a sequence of messages linked by a corresponding sequence of the links, wherein each successive link of a path is selected randomly among the links that originate from a same message using link selection probabilities and
computing a rank of the earlier message as a function of the respective contributions of the links that point to the earlier message, the contribution of the additional link being a function of the number of times the additional link has been selected in the path selection step and the attribute associated to the additional message from which the additional link originates.

In embodiments of the method, the selection of the plurality of paths within the collection messages is made iteratively, the selecting of a path comprising:
(a) Selecting a message,
(b) Selecting a link among the links that originate from the selected message using the link selection probabilities,
(c) Selecting the message pointed to by the link,
(d) Increasing the score of the pointed message as a function of the qualification weight of the link pointing the information object,
(e) with a probability value iterate to step (b) to continue the path or terminate the path.

In embodiments of the method, the computer-based database comprises an heterogeneous collection of information objects including the collection of messages and a collection of user profiles, wherein the information objects are linked by an heterogeneous collection of links including the collection of links between the messages and a second collection of links between the user profiles and the messages, and wherein the computation of a rank for the earlier message is further made as a function of the links of the second collection of links.

In embodiments of the method, the collection of user profiles comprises a profile allocated to the end-user, the datastream further comprising a profile identifier uniquely associated to the profile of the end-user and the method further comprises a step of generating a link in the computer-based database as a authorship link of the second collection of links, the authorship link linking the additional message to the user profile allocated to the end-user.

In embodiments of the method, the links of the second collection of links are selected in the group consisting of authorship links representing the fact that a end-user owning a profile linked to a message wrote said message and "appreciative" links representing the fact that the end-user owning the profile voted for the message.

In embodiments of the method, the step of computing a link-based rank for the earlier message comprises:
selecting a plurality of paths within the heterogeneous collection of information objects, each path comprising a sequence of messages and profiles linked by a corresponding sequence of links,
wherein each successive link of a path is selected randomly among the links that originate from a same message or a same profile using link selection probabilities, wherein the link selection probability of the additional link is a function of the attribute associated to the additional message,
computing a rank of the earlier message as a function of the respective contributions of the links that point to the earlier message, the contribution of a link being a function of the number of times the link has been selected in the path selection step.

In embodiments of the method, the step of computing a link-based rank for the earlier message comprises:
Selecting a plurality of paths within the heterogeneous collection of information objects, each path comprising a sequence of messages and profiles linked by a corresponding sequence of the links,
   wherein each successive link of a path is selected randomly among the links that originate from a same message or a same profile using link selection probabilities,
computing a rank of the earlier message as a function of the respective contributions of the links that point to the earlier message, the contribution of the additional link being a function of the number of times the additional link has been selected in the path selection step and the attribute associated to the additional message from which the additional link originates.

In embodiments of the method, the selection of the plurality of paths within the heterogeneous collection of information objects is made iteratively, the selecting of a path comprising:
(a) Selecting a first information object,
(b) Selecting a link among the links that originate from the selected information object using the link selection probabilities,
(c) Selecting the information object pointed to by the link,
(d) Increasing the score of the pointed information object as a function of a qualification weight of the link pointing the information object,
(e) with a probability value iterate to step (b) to continue the path or terminate the path.

In embodiments of the method, the attribute comprises a quantitative mark representing an appreciation given by the end-user toward the earlier message.

In embodiments of the method, the attribute associated to the additional message is determined as a function of a type of the message, the type being selected in the group consisting of a like type, a comment type, a question type, an answer type, and a development type.

In embodiments of the method, the collection of messages comprises messages stored in a web server implementing a web service selected in the group consisting of internet forums, message boards, social-networks and question and answer services.

In embodiments of the method, the additional message comprises multiple identifiers corresponding to multiple earlier messages and in which the step of generating a link is further made for each of the multiple earlier messages.

In embodiments of the method, the method further comprises a step of generating a webpage comprising the earlier message, wherein the earlier message has a position on the generated webpage and wherein the position is determined as a function of the link-based rank of the earlier message.

In embodiments of the method, the method further comprises receiving a query from a user interface,
selecting an information object as a function of a content of the query, wherein the selecting of a plurality of paths comprises selecting one or more paths starting from the selected information object.

In embodiments, the invention also provides a computer program comprising computer-executable instructions that cause a computer to execute the above mentioned method.

An idea at the basis of the invention is to structure a database of messages e.g. a web-based message board so that individual messages may be ranked using link-based rank computation methods.

An other idea at the basis of the invention is to take into account an attribute defined by an end-user in an additional message posted by the user when applying a link-based ranking of an earlier message of a collection of messages.

Aspects of the invention are based on the idea of allowing the user to make a subjective appreciation on the earlier message by posting an additional message and defining the attribute of the additional message.

Aspects of the invention stem from the observation that in the context of link-based ranking of messages, the quality of the resulting ranks of the messages is improved by weighting the links pointing from the additional message to the earlier message, the weighting being made in order to modify the contribution of the said link on the earlier message.

Aspects of the invention are based on the observation that an end-user could easily browse among a collection of message when displaying the earlier message as a function of the user-enhanced link-based rank.

### Brief description of the drawings

These and other aspects of the invention will be apparent from and elucidated with reference to the embodiments described hereinafter, by way of example, with reference to the drawings.
Figure 1 is a schematic representation of a communication network in which embodiments of a method for ranking messages can be implemented.
Figure 2 is a representation of a database that may be stored in the communication network represented in figure 1.
Figure 3 is a schematic graphical representation of a collection of messages interrelated by collection of links that may be stored in the database represented in figure 2.
Figure 4 is a schematic graphical representation of a heterogeneous collection of messages and user-profiles that may be stored in a database.

### Detailed description of the embodiments

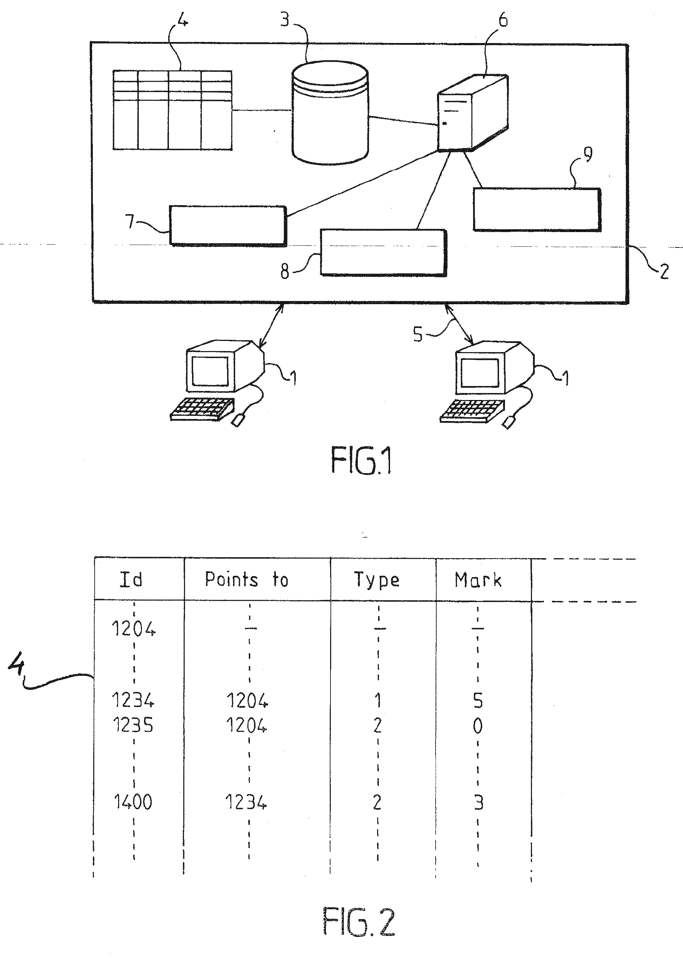

With reference to Figure 1, a computer environment in which a web-based message board service may be implemented comprises computing devices 1 which are connected to a communication network 2. Those computing devices 1 may be PDAs, servers, personal computers, mobile phones etc. The message board service comprises a graphical user interface (GUI) which is displayed on the computing devices 1. This GUI is manipulated by end-users to consult posted messages or send messages to the message board service for publication by the message board service. The message board service comprises a database 4 which is stored in computer-based data repository 3. Through the GUI, the users can enter search requests to display several messages stored in the database 4. The data repository 3 may be centralized or distributed in any number of storage units. The data repository 3 may be co-located with a server 6 or located at a remote location. The message board webservice is implemented in the web server 6 which can modify and access to the content of the database 4 through a connection to the data repository 3. The database 4 contains information objects interrelated by links so that a link-based rank computation method can be executed. More precisely, the information objects comprise messages posted by end-users. In order to obtain the link-based rank, a rank computation module 7 in the server 6 serves to compute link-based ranks of some or all of the information objects in the database 4 as a function of directed links through which the information objects interrelate. A search engine module in the server 6 executes search functions in response to a query entered by an end-user to retrieve information objects that match the query from the database 4. The server further comprises a page generation module 8. A data connection 5 makes it possible to receive and send datastreams from the server 6 to the computing devices and from the computing devices 1 to the server 6 through the communication network 2. Accordingly, the data connection 5 between computing device 1 and the communication network 2 can be a computer bus or a wired or wireless network link, e.g. of a local area network or wide area network.

The data contained in database 4 serves to generate the web pages of the website. When an end-user clicks on a hyperlink to a web page, enters a search request etc., a data stream is sent to the web server 6. The web server 6 analyses the data contained in the datastream and sends back a second datastream in response to the action of the end-user. This second datastream consists, for instance, in a web page that the end-user was seeking by clicking on a hyperlink. The web page is generated by the webpage generation function 8 of the server 6 which uses a PHP code. This generation is made as a function of the data contained in the database 4.

Database 4 contains messages posted by end-users. An end-user can perform an action to display a specific message i.e. clicking on the message header. The data stream sent by the computing device 1 contains data concerning this action. The web server 6 analyses the data and executes a code that may be a PHP code to select the data in the database that must be displayed. From the data and the PHP code, the web server generates an HTML code. This HTML code will be returned in the second data stream to the computing device of the end-user. Then a browser receiving the data stream on the end-user's computing device will be able to display the page according to the HTML code.

The data may further be modified by end-users' actions. Each time an end-user modifies or creates a message on the discussion website, the information concerning the message are saved and are linked together in the database 4. For instance, an end-user creates a message that starts a discussion. The message is transmitted via a datastream to the server 6 which stores the data associated to this message in the database 4 and allocates an identifier to this message. When a second end-user replies to the earlier message, an additional message is sent to the server 6 with the identifier of the earlier message. The additional message is then stored in the database 4 and linked to the earlier message according to the identifier of the earlier message.

When replying to the earlier message, the second end-user can define one or more attributes of the reply message. For that purpose, the GUI displays a selection list where a user can choose between several quantitative marks to make an appreciation to the earlier message. The quantitative marks are explicit values such as a choice between -1,0,+1. In an embodiment the choices are values such as "hates" or "enjoys". The attribute is defined as a function of the qualitative mark selected by the user.

In addition, the message board service may offer several message types for end-users to qualify their posts. The attribute of a post may be the type of message that the end-user uses to reply to the earlier message. As an illustration of the types of message, the end-user may chose to reply with a "like" message type which underlines the fact that the end-user likes the first message and may comprise a short comment, or chose a "development" type message where the end-user just develops his ideas without giving a special appreciation to the earlier message. For that purpose the GUI displays a "like" button and a "development" button under the earlier message. The associated attribute is defined when the user clicks either on the "like" button or the "development button.

When the message is sent, data about the quantitative mark and the type of message is sent to the server 6 through the datastream. When the server receives the datastream it executes a code which is for instance a PHP code. This PHP code will command the inserting of the data concerning the additional message in the database 4.

In an embodiment, the database 4 that stores the above mentioned messages is structured as illustrated in figure 2. This database comprises, for each message stored, several fields which segment the information related to the message, the attribute of the message and the link. The first column "Id" contains the identifier of the message. The second column "Points to" comprises the identifier of the pointed earlier messages that the subsequent message points to. The third column "type" comprises the number code associated to a type of message. More particularly, the number "1" corresponds to a type of message "development" and the number "2" corresponds to the type of message "like". The fourth column "Mark" comprises the quantitative mark of the message.

Therefore, in figure 2, the message having an identifier "1234" is linked to and points to the message "1204". This message "1234" has a quantitative mark attribute equal to 5 and is of the type attribute "1" which corresponds to a message of type "development".

In an embodiment, the discussion website also comprises user profiles that identify the end-users that are registered with the website. The fields in the database 4 (not shown) may also comprise other data such as the profile that identifies the author of the message. In other words, the messages are also linked to the profile of the user that created them. Other fields may also comprise the text content of the message or any other information sent to the web server 6 and related to the message.

However, the invention is not limited to the database structure of figure 2. Any other structure involving messages associated to links and to attributes may be used.

Other types of message may be associated to the messages:
- "Comment" type of message representing a neutral comment a user make on a message,
- "Question" type representing a question a user has about an earlier message
- "Answer" type which represents an answer to a earlier message of the question type.

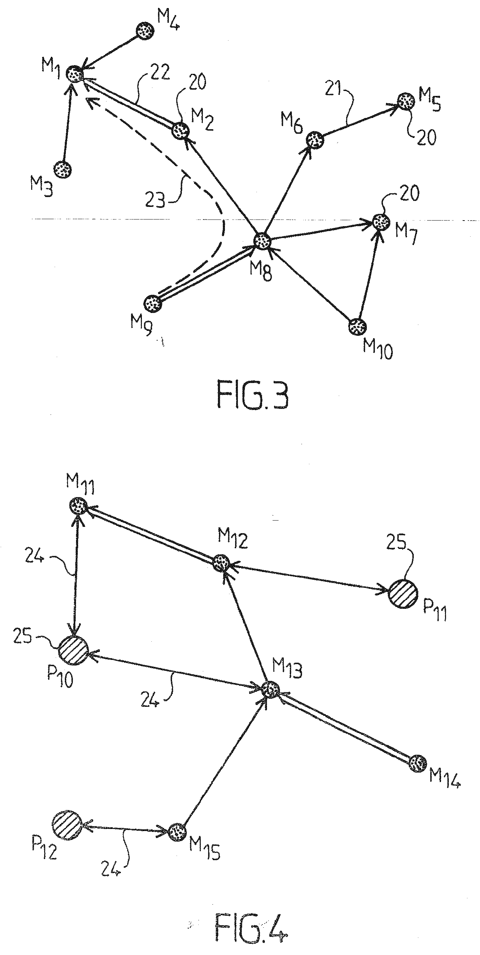

The ranking of messages will now be described in reference to figure 3 and 4.

Figure 3 represents the message collection and the collection of links that may be present in a database such as the one represented in figures 1 and 2. The messages 20 are interrelated by a collection of links. The collection of links comprises links of two types of links: "like" links 21 and "development" links 22.

M1 is the message for which the ld is 1204 in figure 2. Three messages M2,M3,M4 are linked to the message M 1. Message M2 is related to the earlier message M1 and corresponds to the message "1234" of figure 2. Messages M3,M4 are messages of type "like". In figure 3 a double arrow 22 represents a link between a message and the "development" type message associated to it. The simple arrows 21 represent links pointing from a message of type "like" to an earlier message. As it is visible for the message M8, a message may reply to several messages at a time and therefore the message M8 points to several other messages M2,M6,M7.

In this collection of messages and collection of links, a link-based rank may be computed for each message. In an embodiment, a link-based ranking algorithm based on random walk is therefore used and will now be described.

A random walk algorithm makes it possible to compute a score associated to each message. The computation of message scores is made iteratively by the following steps:
- Step1: The initialization step is to select one message Mi. The selection is made randomly.
- Step2: Select a next message Mj linked to and being pointed by the message Mi. The selection is made by uniform probabilities on all possible next messages among messages linked to the selected message Mi. Increment the score of Mj according to a value which is function of an attribute of Mi.
- Step3: With probability (1 - e) return to Step2 and with probability (e) return to Step1. (e) is the damping probability.

The damping probability e is a predetermined value. The damping probability enables to avoid deadlock positions in the collection of messages by re-initializing the path and/or to decrease exponentially the contribution of a message distant from another message.

After a high number of iterations, the ranking is made by sorting the messages according to the scores.

Figure 3 illustrates a possible path 23 resulting from the following steps: step1:M9, step2:M8, step3(return to step 2):M2 and step3(return to step 2 again):M1. Accordingly, M8, M2 and M1 get their score incremented by a value function of the attribute, preferably the quantitative mark, of respectively messages M9, M8 and M2.

The ranking being made, the server can select more precisely the messages to be displayed to the end-user when the end-user requests to display a specific discussion. For instance, in the case of a discussion involving hundreds of messages, the server can generate through the PHP code a webpage which comprises only the highest ranked messages. Therefore the PHP code will command to select the best ranked messages in the database and generate an HTML code according to those messages.

Thereby the end-user will have a webpage with the most relevant messages of the discussion, which will facilitate the browsing amongst these messages of the collection of messages in a webpage.

The collection of messages and links in reference to figure 3 is a simple structure in which the messages may be ranked. More sophisticated structures may, in addition to the messages and their respective links, comprise other information objects such as the profiles of the authors and the links associated to them. An example of such an heterogeneous kind of collection of information objects is represented in figure 4.

Figure 4 represents a structure of messages as in figure 3. In addition, each end-user who sent a message possesses a profile 25. When sending a post, the profile 25 of the end-user is associated to the data sent. This is illustrated in figure 4: the message M11 in the database is linked to the profile P10. In other words, the message M11 was sent by the end-user associated to the profile P10. In this example the relationship between a message and the end-user who sent it is defined by two types of links. Those two types of links are "wrote" and "written by". Each time an end-user sends a post, those two links connect the stored message and the profile of the end-user. These two links are represented by the double sided arrows 24 in figure 4, i.e. a bidirectional authorship link.

With this collection of information objects forming a heterogeneous graph, it is possible to apply a link-based ranking algorithm such as the algorithms disclosed in the application EP11182453 filed on 23 September 2011.

This algorithm is a link-based ranking method adapted to heterogeneous collections of information objects of different natures.

In accordance with that method of ranking information objects, the collection of information objects comprises information objects of a first nature, e.g. messages, and information objects of a second nature, e.g. profiles. The links are each associated to a link type selected among a plurality of link types, e.g. "like" links between messages and "wrote" links between authors and papers.

The method comprises:
allocating a qualification weight to each link,
selecting a plurality of paths within the collection of information objects, each path comprising a sequence of information objects linked by a corresponding sequence of the links, wherein each successive link of a path is selected randomly among the links that originate from a same information object using link selection probabilities,
for each information object of the first nature, computing a score of the messages as a function of the respective contributions of the links that point to the messages, the contribution of a link being a function of the number of times the link has been selected in the path selection step and the qualification weight of the link, and
ranking the information objects of the first nature as a function of the respective scores of the information objects of the first nature.

When applying this algorithm, the attributes of the messages are used to improve the quality of the ranking results. For that purpose, in an embodiment, the qualification weight associated to the links is defined as a function of the quantitative mark attribute and/or the type of message attribute of the message that the said link originates from. Alternatively, the probabilities are determined as a function of the type of message attribute and/or the quantitative mark attribute. Thereby, the contribution of each link is modified by subjective appreciations provided by the end-user through the use of message types and quantitative marks. Indeed, a higher quantitative mark will imply that the contribution of the link is more important than a lower quantitative mark. If a message is of the type of development type of message, the contribution of the link would be more important than if the message is of the like type of message.

However the invention is not limited to this specific algorithm and any other link-based ranking algorithm adapted to a homogeneous or heterogeneous collection may be used to compute a link-based rank for the messages.

As explained above, the link-based rank is used to display the relevant message of a discussion which an end-user requested to display. With the computed link-based rank, a graphical user interface (GUI) such as the one disclosed in application EP11182967 filed on 27 September 2011 can be generated to display the most relevant messages. The GUI is generated on a display and comprises a graph, wherein the graph comprises a plurality of icons each representing a message of the collection of messages and a plurality of connectors connecting the icons, each connector representing at least one link of the collection of links. The GUI may displays a central icon for the best-ranked message and icons disposed around it for further significant messages. In order to show a relatively simple graph, the choice can be made to display only icons representing messages that make a significant contribution to the rank of the best-ranked messages.

The methods above mentioned may be further applied on other kinds of vvebservices such as social-networks services, webmail-boxes services, question and answer services.

The methods above mentioned may be further applied on more sophisticated graphs structure. As an example, the message and profiles collections may further be associated to a collection of topics which is related by a third collection of links to the messages and the profiles.

In embodiments, the message of several discussions may be ranked together using the above mentioned method. In embodiments, the messages of a whole forum or several forums having the same structure may be ranked using the above mentioned methods.

The methods described hereinabove may be executed through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software. The same item of hardware may represent several "means".

In the claims, any reference signs placed between parentheses shall not be construed as limiting the scope of the claims.

## Claims

1. A computer implemented method for user-enhanced ranking of messages, the method comprising:
receiving a datastream, the datastream comprising a message generated by an end-user, an identifier of an earlier message (M1) and an attribute defined by the end-user, the earlier message being stored in a computer-based database (4) comprising a collection of messages interrelated by a collection of directional links,
storing the message in the computer based database as an additional message (M2) of the collection of messages,
generating a link (22) in the computer-based database as an additional link of the collection of links, the additional link pointing from the additional message to the earlier message,
storing the attribute in the computer-based database (4) in association to the additional message, and
computing a link-based rank for the earlier message as a function of the collection of links and the attribute associated to the additional message.

2. A computer implemented method according to claim 1, wherein the step of computing a rank for the earlier message comprises:
selecting a plurality of paths (23) within the collection of messages, each path comprising a sequence of messages linked by a corresponding sequence of the links (22,21), wherein each successive link of a path is selected randomly among the links that originate from a same message using link selection probabilities and
computing a rank of the earlier message (M1) as a function of the respective contributions of the links that point to the earlier message, the contribution of the additional link being a function of the number of times the additional link has been selected in the path selection step and the attribute associated to the additional message from which the additional link originates.

3. A computer implemented method according to claim 2, wherein the selection of the plurality of paths (23) within the collection of messages is made iteratively, the selecting of a path comprising:
(a) Selecting a message,
(b) Selecting a link among the links that originate from the selected message using the link selection probabilities,
(c) Selecting the message pointed to by the link,
(d) Increasing the score of the pointed message as a function of a qualification weight of the link pointing the information object,
(e) with a probability value iterate to step (b) to continue the path or terminate the path.

4. A computer implemented method according to claim 1, wherein the computer-based database (4) comprises an heterogeneous collection of information objects including the collection of messages (M11,M12) and a collection of user profiles (P10,P11), wherein the information objects are linked by an heterogeneous collection of links including the collection of links (22,21) between the messages and a second collection of links (24) between the user profiles and the messages, and wherein the computation of a rank for the earlier message is further made as a function of the links of the second collection of links.

5. A computer implemented method according to claim 4, wherein the collection of user profiles comprises a profile (P10) allocated to the end-user, the datastream further comprising a profile identifier uniquely associated to the profile of the end-user and the method further comprises a step of generating a link (24) in the computer-based database as a authorship link of the second collection of links, the authorship link linking the additional message to the user profile allocated to the end-user.

6. A computer implemented method according to claim 4 or 5, wherein the links of the second collection of links (24) are selected in the group consisting of authorship links representing the fact that a end-user owning a profile linked to a message wrote said message and "appreciative" links representing the fact that the end-user owning the profile voted for the message.

7. A computer implemented method according to any one of claims 4 to 6, wherein the step of computing a link-based rank for the earlier message (M11) comprises:
selecting a plurality of paths within the heterogeneous collection of information objects, each path comprising a sequence of messages and profiles linked by a corresponding sequence of links,
wherein each successive link of a path is selected randomly among the links that originate from a same message or a same profile using link selection probabilities, wherein the link selection probability of the additional link is a function of the attribute associated to the additional message,
computing a rank of the earlier message as a function of the respective contributions of the links that point to the earlier message, the contribution of a link being a function of the number of times the link has been selected in the path selection step.

8. A computer implemented method according to any one of claims 4 to 6, in which the step of computing a link-based rank for the earlier message (M11) comprises:
Selecting a plurality of paths within the heterogeneous collection of information objects, each path comprising a sequence of messages and profiles linked by a corresponding sequence of the links,
wherein each successive link of a path is selected randomly among the links that originate from a same message or a same profile using link selection probabilities,
computing a rank of the earlier message as a function of the respective contributions of the links that point to the earlier message, the contribution of the additional link being a function of the number of times the additional link has been selected in the path selection step and the attribute associated to the additional message from which the additional link originates.

9. A computer implemented method according to any one of claims 7 to 8, wherein the selection of the plurality of paths within the heterogeneous collection of information objects is made iteratively, the selecting of a path comprising:
(a) Selecting a first information object ,
(b) Selecting a link among the links that originate from the selected information object using the link selection probabilities,
(c) Selecting the information object pointed to by the link,
(d) Increasing the score of the pointed information object as a function of a qualification weight of the link pointing the information object,
(e) with a probability value iterate to step (b) to continue the path or terminate the path.

10. A computer implemented method according to any one of claims 1 to 9, in which the attribute comprises a quantitative mark representing an appreciation given by the end-user toward the earlier message (M1).

11. A computer implemented method according to any one of claims 1 to 9, wherein the attribute associated to the additional message (M2) is determined as a function of a type of the message, the type being selected in the group consisting of a like type, a comment type, a question type, an answer type, and a development type.

12. A computer implemented method according to any one of claims 1 to 11, in which the collection of messages comprises messages stored in a web server (6) implementing a web service selected in the group consisting of internet forums, message boards, social-networks and question and answer services.

13. A computer implemented method according to any one of claims 1 to 12, wherein the additional message (M8) comprises multiple identifiers corresponding to multiple earlier messages (M2,M6,M7) and in which the step of generating a link is further made for each of the multiple earlier messages.

14. A computer implemented method according to any one of claims 1 to 13, wherein the method further comprises a step of generating a webpage comprising the earlier message (M1), wherein the earlier message has a position on the generated webpage and wherein the position is determined as a function of the link-based rank of the earlier message.

15. A computer program comprising computer-executable instructions that cause a computer to execute the method according to any one of claims 1 to 14.

## Amended claims

### Amended claims in accordance with Rule 137(2) EPC.

**1.** A computer implemented method for user-enhanced ranking of messages, the method comprising:
receiving a datastream, the datastream comprising a message generated by an end-user and an identifier of an earlier message (M1), the earlier message (M1) being stored in a computer-based database (4) comprising a collection of messages (20) interrelated by a collection of directional links (21, 22, 24),
storing the message in the computer based database (4) as an additional message (M2) of the collection of messages,
generating a link (22) in the computer-based database (4) as an additional link of the collection of links, the additional link pointing from the additional message (M2) to the earlier message (M1),
computing a link-based rank for the earlier message (M1) as a function of the collection of links,
**characterized in that**
the message generated by the end user further comprises an attribute defined by the end-user, the defined attribute being a value selected by the user among a plurality of predefined values,
the method further comprises a step of storing the attribute in the computer-based database (4) in association to the additional message (M2) and
the computing of a link-based rank for the earlier message is further made as a function of the attribute associated to the additional message (M2).

**2.** A computer implemented method according to claim 1, wherein the step of computing a rank for the earlier message comprises:
selecting a plurality of paths (23) within the collection of messages, each path comprising a sequence of messages linked by a corresponding sequence of the links (22,21), wherein each successive link of a path is selected randomly among the links that originate from a same message using link selection probabilities and
computing a rank of the earlier message (M1) as a function of the respective contributions of the links that point to the earlier message, the contribution of the additional link being a function of the number of times the additional link has been selected in the path selection step and the attribute associated to the additional message from which the additional link originates.

**3.** A computer implemented method according to claim 2, wherein the selection of the plurality of paths (23) within the collection of messages is made iteratively, the selecting of a path comprising:
(a) Selecting a message,
(b) Selecting a link among the links that originate from the selected message using the link selection probabilities,
(c) Selecting the message pointed to by the link,
(d) Increasing the score of the pointed message as a function of a qualification weight of the link pointing the information object,
(e) with a probability value iterate to step (b) to continue the path or terminate the path.

**4.** A computer implemented method according to claim 1, wherein the computer-based database (4) comprises an heterogeneous collection of information objects including the collection of messages (M11,M12) and a collection of user profiles (P10,P11), wherein the information objects are linked by an heterogeneous collection of links including the collection of links (22,21) between the messages and a second collection of links (24) between the user profiles and the messages, and wherein the computation of a rank for the earlier message is further made as a function of the links of the second collection of links.

**5.** A computer implemented method according to claim 4, wherein the collection of user profiles comprises a profile (P10) allocated to the end-user, the datastream further comprising a profile identifier uniquely associated to the profile of the end-user and the method further comprises a step of generating a link (24) in the computer-based database as a authorship link of the second collection of links, the authorship link linking the additional message to the user profile allocated to the end-user.

**6.** A computer implemented method according to claim 4 or 5, wherein the links of the second collection of links (24) are selected in the group consisting of authorship links representing the fact that a end-user owning a profile linked to a message wrote said message and "appreciative" links representing the fact that the end-user owning the profile voted for the message.

**7.** A computer implemented method according to any one of claims 4 to 6, wherein the step of computing a link-based rank for the earlier message (M11) comprises:
selecting a plurality of paths within the heterogeneous collection of information objects, each path comprising a sequence of messages and profiles linked by a corresponding sequence of links,
wherein each successive link of a path is selected randomly among the links that originate from a same message or a same profile using link selection probabilities, wherein the link selection probability of the additional link is a function of the attribute associated to the additional message,
computing a rank of the earlier message as a function of the respective contributions of the links that point to the earlier message, the contribution of a link being a function of the number of times the link has been selected in the path selection step.

**8.** A computer implemented method according to any one of claims 4 to 6, in which the step of computing a link-based rank for the earlier message (M11) comprises:
Selecting a plurality of paths within the heterogeneous collection of information objects, each path comprising a sequence of messages and profiles linked by a corresponding sequence of the links,
wherein each successive link of a path is selected randomly among the links that originate from a same message or a same profile using link selection probabilities,
computing a rank of the earlier message as a function of the respective contributions of the links that point to the earlier message, the contribution of the additional link being a function of the number of times the additional link has been selected in the path selection step and the attribute associated to the additional message from which the additional link originates.

**9.** A computer implemented method according to any one of claims 7 to 8, wherein the selection of the plurality of paths within the heterogeneous collection of information objects is made iteratively, the selecting of a path comprising:
(a) Selecting a first information object ,
(b) Selecting a link among the links that originate from the selected information object using the link selection probabilities,
(c) Selecting the information object pointed to by the link,
(d) Increasing the score of the pointed information object as a function of a qualification weight of the link pointing the information object,
(e) with a probability value iterate to step (b) to continue the path or terminate the path.

**10.** A computer implemented method according to any one of claims 1 to 9, in which the attribute comprises a quantitative mark representing an appreciation given by the end-user toward the earlier message (M1).

**11.** A computer implemented method according to any one of claims 1 to 9, wherein the attribute associated to the additional message (M2) is determined as a function of a type of the message, the type being selected in the group consisting of a like type, a comment type, a question type, an answer type, and a development type.

**12.** A computer implemented method according to any one of claims 1 to 11, in which the collection of messages comprises messages stored in a web server (6) implementing a web service selected in the group consisting of internet forums, message boards, social-networks and question and answer services.

**13.** A computer implemented method according to any one of claims 1 to 12, wherein the additional message (M8) comprises multiple identifiers corresponding to multiple earlier messages (M2,M6,M7) and in which the step of generating a link is further made for each of the multiple earlier messages.

**14.** A computer implemented method according to any one of claims 1 to 13, wherein the method further comprises a step of generating a webpage comprising the earlier message (M1), wherein the earlier message has a position on the generated webpage and wherein the position is determined as a function of the link-based rank of the earlier message.

**15.** A computer program comprising computer-executable instructions that cause a computer to execute the method according to any one of claims 1 to 14.
